# EUROPEAN PATENT SPECIFICATION

(11) **EP 3 450 224 B1**
(45) Date of publication and mention of the grant of the patent: **15.07.2020**
(21) Application number: 18191831.9
(22) Date of filing: 30.08.2018
(51) Int. Cl.: B60C 23/12

(54) **CONTROL VALVE FOR AN AIR MAINTENANCE TIRE**
REGELVENTIL FÜR EINEN LUFTWARTUNGSREIFEN
SOUPAPE DE COMMANDE POUR UN PNEU DE MAINTENANCE D'AIR

(30) Priority: 01.09.2017 US 201762553340 P
(43) Date of publication of application: 06.03.2019
(73) Proprietor: The Goodyear Tire & Rubber Company, Akron, OH 44316 (US)
(72) Inventor: LIN, Cheng-Hsiung, Hudson, Ohio 44236 (US); LAMGADAY, Robin, Copley, OH 44321 (US); KARIKAS, George John, Seattle, Washington 98177 (US); STEPHENS, Charles Edgar, Seattle, Washington 98177 (US)
(74) Representative: Kutsch, Bernd

(56) References cited:
- EP-A1- 3 339 061
- US-A1- 2017 144 493

## Description

### Field of the Invention

The invention relates generally to valves for tires, and more particularly to a control valve for an air maintenance tire.

### Background of the Invention

Normal air diffusion reduces tire pressure over time. The natural state of tires is under inflated. Accordingly, drivers must repeatedly act to maintain tire pressure or they will see reduced fuel economy, tire life and reduced vehicle braking and handling performance. Tire Pressure Monitoring Systems have been proposed to warn drivers when tire pressure is significantly low. Such systems, however, remain dependent upon the driver taking remedial action when warned to re-inflate a tire to recommended pressure. It is a desirable, therefore, to incorporate an air maintenance feature within a tire that will self-maintain the tire air pressure in order to compensate for any reduction in tire pressure over time without a need for driver intervention.

European patent application EP3339061 A1 discloses a control valve for an air maintenance tire in which four check valves are arranged in vertically oriented modules.

U.S. patent application US2017/0144493 A1 discloses a valve stem based air maintenance tire having a peristaltic pump and a valve housing. The valve housing has a first check valve connected to the valve stem stopping pressuring of the tire at a certain threshold. A second check valve allows inflating the tire through a manual fill assembly.

### Summary of the Invention

The invention relates to a control valve in accordance with claim 1 and to an air maintenance assembly in accordance with claim 7.

Dependent claims refer to preferred embodiments of the invention.

According to a preferred aspect of the invention, a control valve assembly mounts to a tire valve stem and operably controls a flow of pressurized air through the tire valve stem from either an external pressurized air source or a wheel or tire mounted pressurized air source. The tire mounted pressurized air source may be a peristaltic pump preferably built into the tire sidewall. The wheel mounted pressurized air source may comprise a wheel mounted pump. The control valve assembly optionally includes a bi-directional feature so that if a peristaltic pump is used, the tire may rotate in either direction and pump air into the valve stem.

According to a preferred aspect of the invention, the valve body is injection molded.

According to a preferred aspect of the invention, the air maintenance assembly is bidirectional.

According to a preferred aspect of the invention, the valve body has an internal passageway in fluid communication with the main pressure chamber, wherein the internal passageway is configured for mounted on the distal end of the tire valve stem.

### Definitions

"Circumferential" means lines or directions extending along the perimeter of the surface of the annular tread perpendicular to the axial direction.

"Duck Valve" is a check valve manufactured from rubber or synthetic elastomer, and shaped like the beak of a duck. One end of the valve is stretched over the outlet of a supply line, conforming itself to the shape of the line. The other end, the duckbill, retains its natural flattened shape. When pressurized air is pumped from the supply line through the duckbill, the flattened end opens to permit the pressurized air to pass. When pressure is removed, the duckbill end returns to its flattened shape, preventing backflow.

"Equatorial Centerplane (CP)" means the plane perpendicular to the tire's axis of rotation and passing through the center of the tread.

"Peristaltic" means operating by means of wave-like contractions that propel contained matter, such as air, along tubular pathways.

### Brief Description of the Drawings

The invention will be described by way of example and with reference to the accompanying drawings in which:
FIG.1 is a perspective view of a tire with a control valve of the present invention mounted onto a tire valve stem.
FIG.2 is a close up view of the control valve of Fig. 1.
FIG. 3 is a perspective front view of the control valve of the present invention.
FIG. 4 is a bottom perspective view of the control valve.
FIG. 5 is an exploded view of the control valve of the present invention.
FIG. 6 is a cross-sectional view of a conventional tire valve stem.
FIG. 7A is a cross-sectional view of the distal end of the tire valve stem shown mounted in the control valve assembly.
FIG. 7B is an enlarged view of the circled portion of Fig. 7A.
FIG. 8 is a top view of the control valve of Fig. 3.
FIG. 9 is a bottom view in the direction 9-9 of Fig. 10 with the bottom cover removed and showing the filter and the relief valve.
FIG. 10 is a cross-sectional view of the control valve of Fig. 8 in the direction 10-10.
FIG. 11 is a cross-sectional view of the control valve of FIG. 10 in the direction 11-11.
FIG. 12A is a cross-sectional view of the control valve of Fig. 8 in the direction 12-12.
FIG. 12B is a close up view of the circled portion of Fig. 12.
FIG. 13 is a cross-sectional view of the control valve of Fig.8 in the direction 13-13.
FIG. 14 is a cross-sectional view of the control valve of Fig.3 in the direction 14-14.
FIG. 14B is a close up view of the circled portion of Fig. 14.
FIG. 15 is a schematic of a flow control diagram of the present invention.

### Detailed Description of Example Embodiments of the Invention

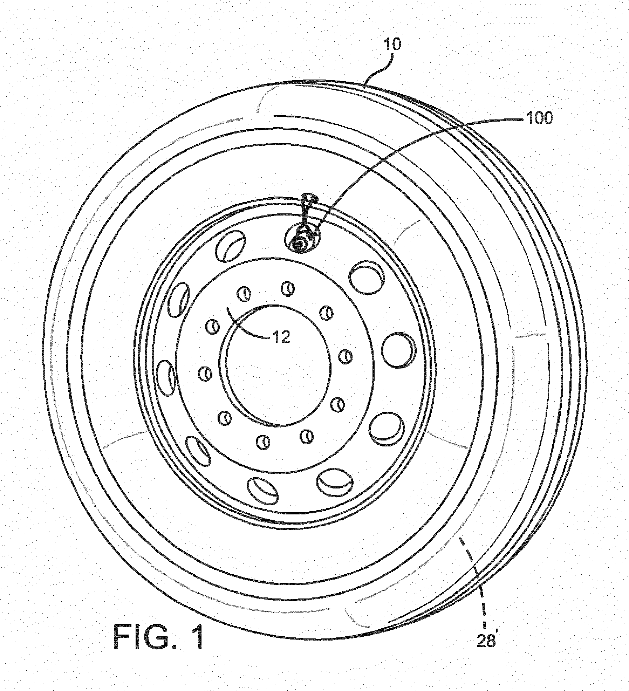

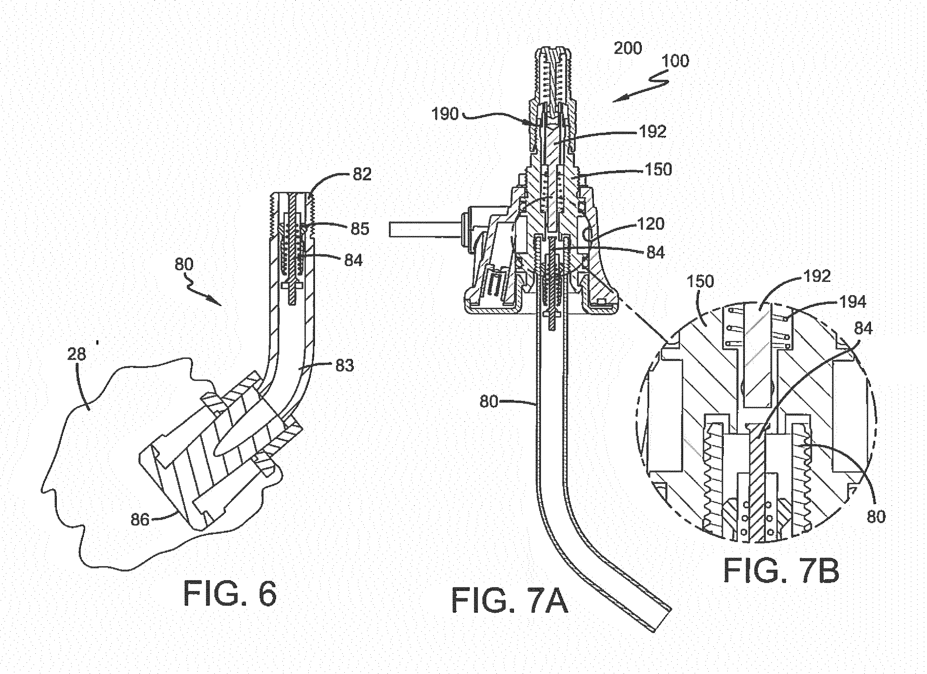

Referring to FIGS. 1-2, a control valve assembly 100 of a a preferred embodiment of the present invention is shown mounted to a conventional valve stem 80 of a tire 10. The tire 10 is mounted on a conventional tire rim body 12. The tire includes a pump 15 which may be mounted in or on the tire sidewall or on any other part of the tire. The pump 15 is preferably peristaltic and may preferably be annular or 360 degree pump so that the inlet end of the pump is several inches from the outlet end of the pump assembly. The tire and rim body enclose a tire cavity 28'. The tire 10 preferably includes a conventional valve stem 80 as shown in Fig. 6 for allowing a user to manually pump air into the tire cavity 28'. The valve stem 80 includes an inlet end 82 that preferably has a valve core 84 with a central pin 85 such as a presta valve core or a shraeder valve core as shown. The valve stem 80 includes an internal flow channel 83 that communicates air from the inlet end 82 to a distal end 86. The valve stem distal end 86 is positioned in the tire cavity 28' so that fluid may be communicated from the distal end of the valve stem through the tire valve core and into the cavity.

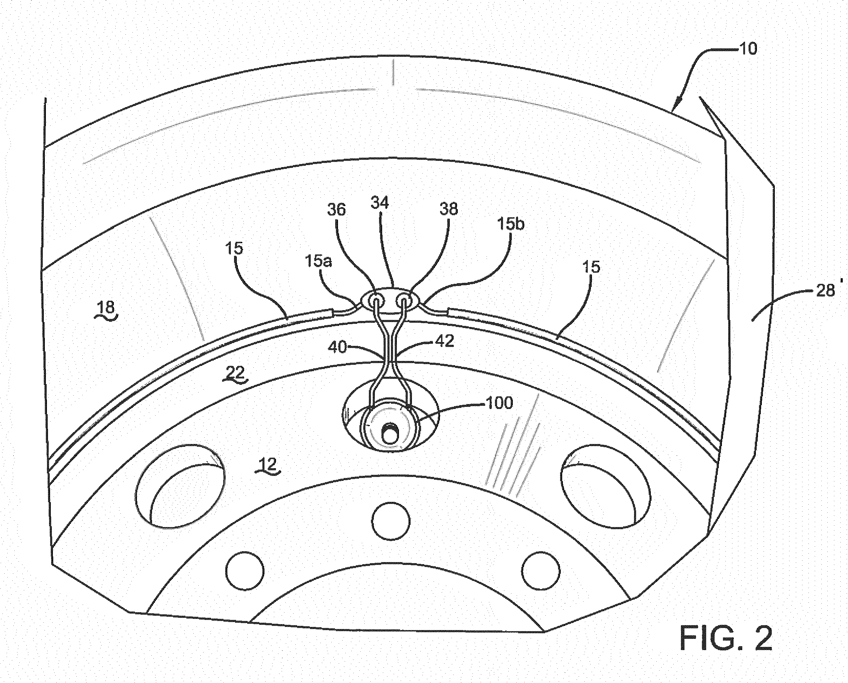

As shown in Fig. 2, the peristaltic pump 15 may comprise a molded annular passageway with an annular air tube that is inserted into an annular passageway. The tube is formed of a resilient, flexible material such as plastic or rubber compounds that are capable of withstanding repeated deformation cycles. So constructed, the tube may deform within a tire into a flattened condition subject to external force and, upon removal of such force, return to an original sectional configuration. In the embodiment shown, the cross-section of the tube in an unstressed state is generally circular but other alternative tube geometries may be employed if desired. The tube is of a diameter sufficient to operatively pass a requisite volume of air sufficient for the purpose of pumping air into the tire cavity 28' to maintain the tire 10 at a preferred inflation pressure.

The peristaltic principles of incorporating a deformable air tube within a tire are described in US-B-8,113,254. In this system, the tube is incorporated within an annular tire passageway formed within the tire proximate a tire bead region. As the tire rotates air from outside the tire is admitted into the tube and pumped along the air tube by the progressive squeezing of the tube within the tire as the tire rotates. Air is thus forced into an outlet valve and therefrom into the tire cavity to maintain air pressure within the tire cavity at a desired pressure level.

As partially shown in Figure 2, the pump 15 is preferably annular and is preferably located in the tire sidewall 18 region proximate to a bead region 22. However, other configurations for the air tube may be devised without departing from the invention. Opposite ends 15a, 15b of the pump connect into an inline connector block 34. Conduits 40, 42 each have a first end 40a, 42a coupled to the connector block 34, wherein each first end is connected to a respective end of the pumping tube 15a, 15b. A second end 40b, 42b of each conduit 40, 42 is connected to the control valve ports 116, 118. Conduits 40 and 42 represent air channels to and from the pump 15. In the pumping mode, forward revolution of the tire, one conduit delivers air to the pumping tube and the other conduit conducts air pressurized by the pumping tube to the control valve. In the reverse rotational direction of the tire, the conduits 40, 42 functionally reverse.

### Control Valve

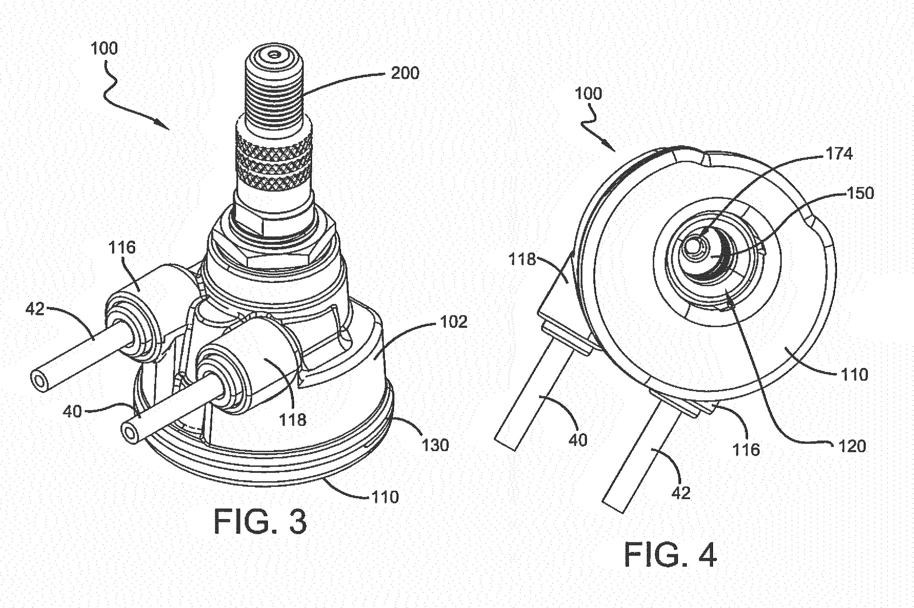

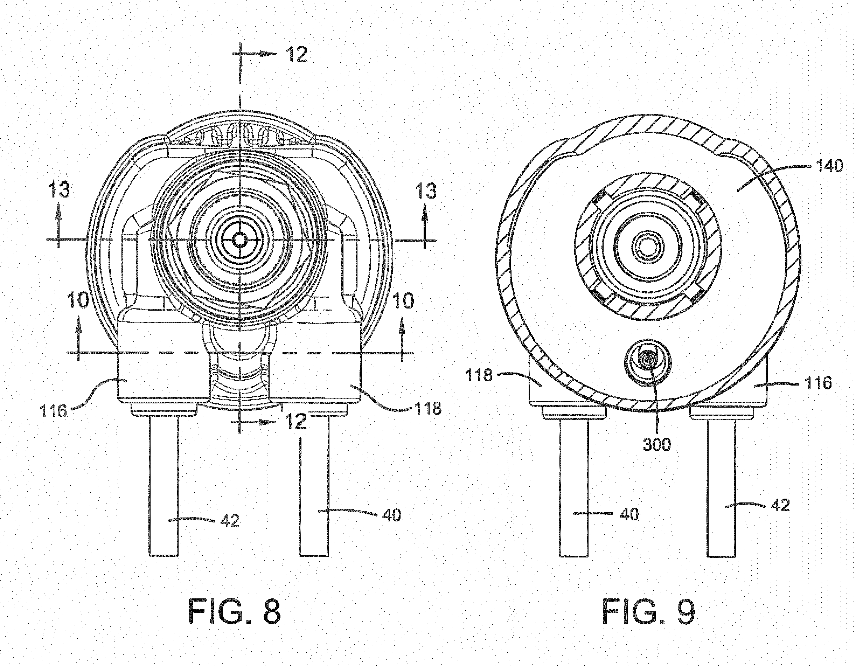

A first embodiment of the control valve 100 is shown in Figures 3-15. As shown in Figure 3, the control valve 100 is preferably formed of a molded outer body 102 that may be preferably injection molded. The control valve 100 has a left port 116 and a right port 118 for connecting to conduits 40, 42. In this embodiment, the left port 116 will be described as an air inlet port while right port 118 will be described as an outlet port. When the tire is rotated in the opposite direction, the functionality reverses so that the inlet port becomes the outlet port. Each left and right port 116, 118 have a barbed fitting 20, 22 that is removably received in a left and right passageway 24, 26. The barbed ends 21, 23 are connected to conduits 42, 44. Positioned within the left and right passageway 24, 26 is a left and right check valve 28, 30. The left and right check valves 28, 30 are preferably duck bill type and are oriented to allow flow from the pump to the valve, and prevent flow from the valve to the pump through left and right passageways 24, 26.

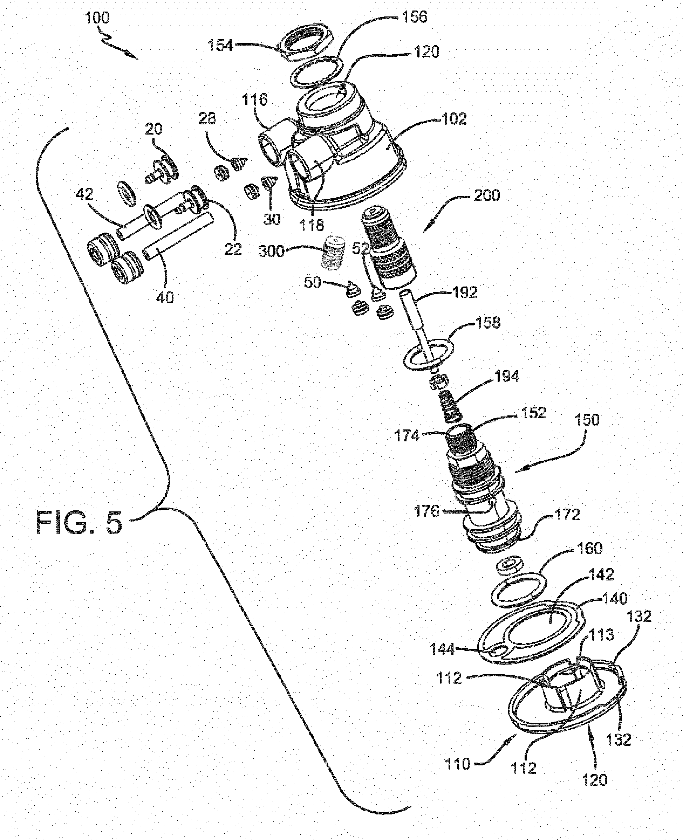

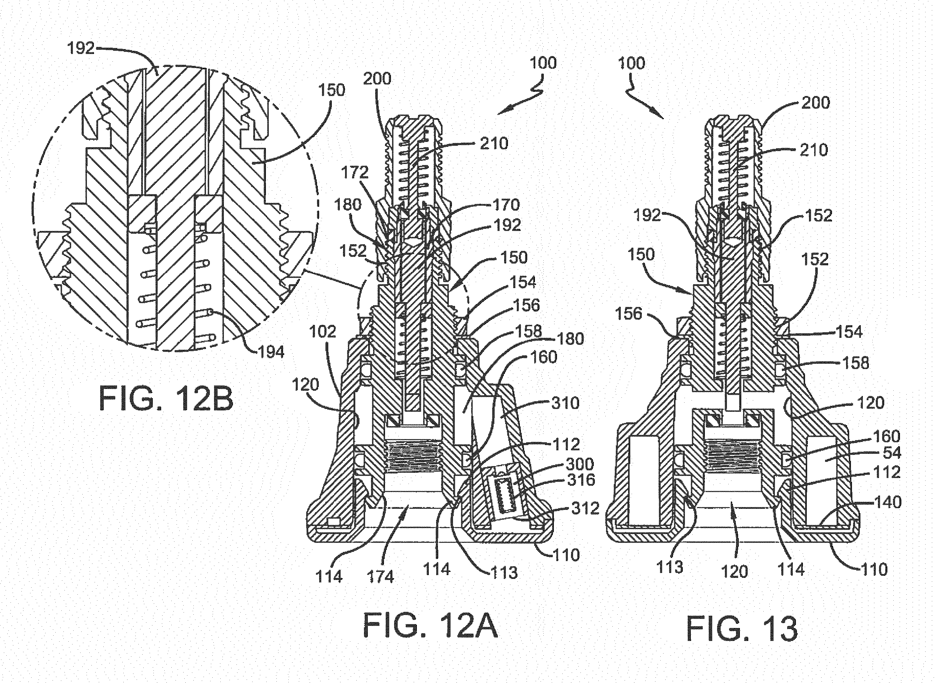

As shown in Figure 4, the control valve 100 has a removable bottom cover 110 that snap fits onto the lower end of the body 102. As shown in Figure 5, the removable bottom cover 110 has one or more pronged ends 112 that preferably form an array and extend outwardly from the bottom cover, forming an entrance to a central passageway 120 of the housing. The prong ends 112 are received in the central passageway 120 and have detents 113 that interlock with locking members 114 of a main pressure chamber 150 as shown in Figure 13. The locking members extend down from the main pressure chamber 150 and into a central passageway 120 of the valve body 102. As best shown in Figures 3 and 5, the bottom cover has recessed portions 132 that form one or more air inlet openings 130 located between the bottom cover and housing. As shown in Fig. 5, an air filter 140 is positioned in the body 102 adjacent the bottom cover 110. The filter 140 has a central hole 142 positioned for alignment with the central passageway 120 of the valve.

### Main Pressure Chamber Module

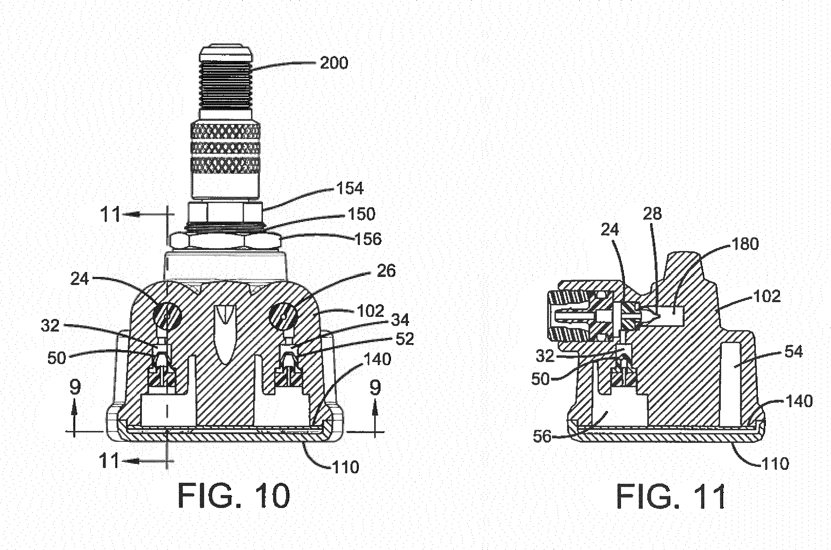

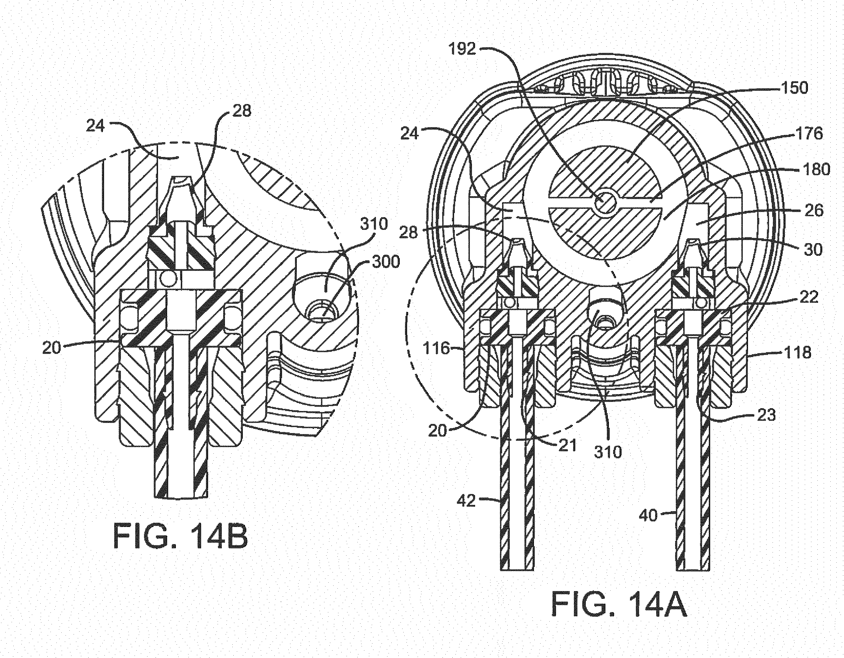

As shown in Figures 3-4 and 12-13, the control valve body 102 is preferably compact, and has a removable main pressure chamber 150 positioned with the interior of the body 102 in the housing central passageway 120. The central passageway extends through the entire length of the body 102. The main pressure chamber 150 has a threaded end 152 that is received within the central passageway 120 and is secured to the body 102 via a nut 154 and a locking nut 156. Although not shown, the main pressure chamber may be integrally formed in the housing. The main pressure chamber 150 has a first and second o ring 158,160 for forming a fluid tight seal with the central passageway 120. As shown in Figure 12, the main pressure chamber 150 has a central passageway 170 for communicating fluid from the inlet end 172 of the main pressure chamber 150 to the outlet end 174 of the main pressure chamber 150. The central passageway 170 is in fluid communication with a main pressure chamber passageway 176. The main pressure chamber passageway 176 is in fluid communication with the circular passageway 180. The circular passageway 180 is in fluid communication with relief valve 300 via the relief passageway 310. The circular passageway 180 is also in fluid communication with left and right passageways 24, 26. As shown in Fig 14A, the left and right passageways 24, 26 are oriented in the horizontal direction. The left and right passageways 24, 26 are in fluid communication with vertical passageways 32, 34. The vertical passageways 32, 24 as shown in Figures 10 and 11, have a first end located at the bottom of the valve and are in fluid communication with ambient air. The vertical passageway 32 has a second end that is in fluid communication with left passageway 24, upstream of check valve 28 and downstream of inlet fitting 20, while the vertical passageway 34 has a second end that is in fluid communication with right passageway 26, upstream of check valve 30 and downstream of inlet fitting 22.

The control valve 100 has optional reservoirs 54, 56 for storage of air, wherein the optional reservoirs are in fluid communication with the vertical passageways 32, 34.

### Connection to Valve Stem

As shown in Fig 7A, the distal end 82 of the tire valve stem 80 is received in the inlet end 172 of the main pressure chamber 150. An optional auxiliary valve core 190 including a central pin 192 and biasing spring 194 is mounted in the main passageway 170 of the main pressure chamber. The central pin 192 has an inner end positioned for engagement with pin 84 of the tire valve stem 80. The optional auxiliary valve core 190 allows a user to manually connect a pressured source of air to the inlet end 172 in order to add air into the tire, which is communicated to the tire cavity via the valve stem 80. An optional alligator double seal valve cap v2b 200 is mounted on the threaded distal end 152 of the main pressure chamber 150. The double seal valve cap 200 has an internal pin 210 that engages the pin 192 of the auxiliary valve core 190. The main pressure chamber 150 of the valve 100 primarily functions to communicate pressurized air from the pump 15 into the tire cavity via the valve stem 80. The main pressure chamber 150 also prevents overpressure of the tire 10 because it is in fluid communication with a pressure relief valve 300, as described in more detail, below.

For a bidirectional feature such that the tire can be pumped in either rotational direction, there are preferably two pairs of check valves. The first pair of check valves 28, 30 each extend separate passageways, wherein each passageway connects the inlet/outlet port of the valve and the main pressure chamber passageway 176 which is in fluid communication with the valve stem 80. The first pair of check valves 28, 30 prevent backflow from the valve into the pump. The second pair of check valves 50, 52 are in fluid communication with the ambient air, a respective one of the valve ports 20, 22, and a respective one of the first pair of check valves 28, 30. The second pair of check valves 50, 52 prevent air from leaking out of the valve. The check valves 28, 30, 50, 52 are preferably duck bill type check valves.

The relief valve 300 is positioned in relief passageway 310 of control valve 100. The relief valve is designed to prevent over inflation of the tire cavity. The relief passageway 310 in fluid communication with the main pressure chamber 176. The outlet 312 to the relief valve 180 is in fluid communication with the ambient atmosphere. The relief valve has a spring 316 that biases the valve core 300 in the closed position. When the inlet pressure to the relief valve exceeds the desired set pressure, the valve opens, allowing the pressurized air to vent through the relief valve body and out through the exit holes 312.

In this embodiment, the outlet pressurized air from the pumping tube is controlled by the spring regulated relief valve 300. If the tire cavity pressure is less than the set pressure, the tire valve 84 opens, allowing air into the tire cavity. If the tire cavity pressure is higher than the set pressure, the pumped air will release through the relief valve 300 into the atmosphere. The set pressure is determined by selecting a spring of the relief valve that actuates at the desired set pressure. The spring 85 of the tire valve stem 80 is selected to have a lower cracking pressure so that the when the main chamber pressure is below the relief valve set pressure and the pressure difference between the pressurized air and tire cavity is higher than the cracking pressure, the tire cavity will be pumped with pressurized air until the relief valve set pressure is reached.

An adjustable relief valve may be substituted for the fixed relief valve 300 shown herein. The adjustable relief valve has a screw adjustment that allows the set pressure to be easily adjusted.

### System Operation

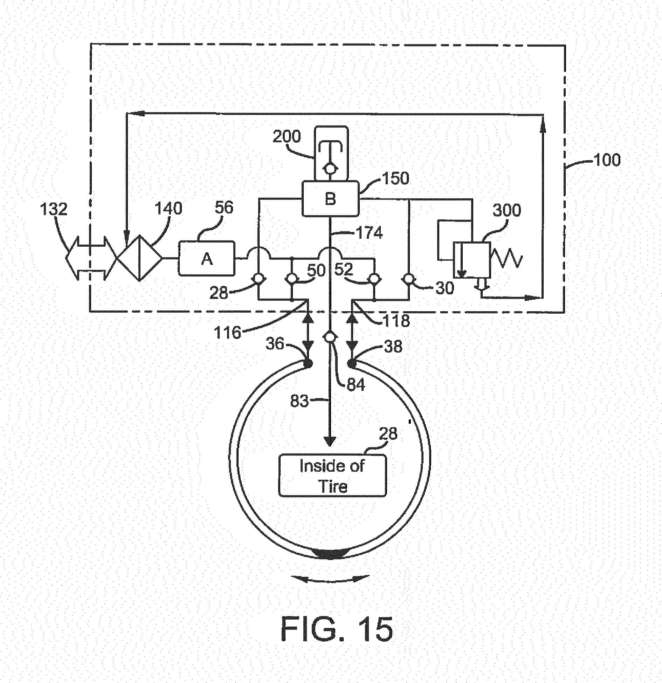

The operation of the system is shown in Figure 15. Outside ambient air is sucked into the system through the inlet 132 located at the interface of the bottom cap and the valve body 102. The ambient air passes through the filter 140 and then through vertical passageway 34 into check valve 52. The air exits the vertical passageway 34 and then outlet port 22, through conduit 42, and then into the inlet of the peristaltic pump 15b. As the tire rotates, the air is compressed in the peristaltic pump and exits the pump chamber to pump outlet 15a. The compressed air enters the control valve through inlet port 20. The compressed air travels through check valve 28 into the main pressure chamber passageway 176 of the control valve 100. If the pressure of the main pressure chamber passageway 176 is greater than the cracking pressure of the tire valve 84 and less than the relief set pressure, then the pressurized air will enter the tire cavity through the valve stem 80 of the tire. If the pressure of the main pressure chamber is less than the cracking pressure of the tire valve 82, then the tire valve 82 will remain closed. If the pressure of the main pressure chamber exceeds the ceiling set pressure of the relief valve 300, the relief valve will open and the compressed air will exit into the ambient air.

The control valve can operate bi-directionally, so that if the tire rotates in the opposite direction, the system will pump without any changes being made to the system. The bi-directionality in pumping air from the pump is made possible by the dual air flow paths 50, 52, wherein each flow path preferably is straight with no bends. The bi-directional feature is useful when the pump is located in the tire, so that if the tire rotates in either direction the system will inflate the tire cavity.

However, the bi-directional feature is optional. The system may also work for a one directional system, a check valve from each check valve pair can be eliminated.

The advantages of the subject invention is that the control valve retains the ability to manually fill air into the tire with the use of a standard external pump, while the control valve directs the pressurized air to pump the tire cavity during operation of the system. The control valve has a compact housing that can be installed onto a tire valve stem for pumping air from the pump into the tire cavity through the valve stem. The control valve prevents the tire cavity from being over pressurized with either the manual fill or via the peristaltic pump. The set pressure is easily adjusted by screw adjustment to the control regulator without dismounting the tire. The filter and the control valve in its entirety may be easily replaced if needed.

## Claims

1. A control valve (100) for controlling the pressure in a tire cavity (28') of a tire (10) during operation of a pump (15) having a pump inlet (42) and a pump outlet (40), the tire (10) having a tire cavity (28') and a valve stem (80) having a distal end, the control valve (100) comprising:
a valve body (102) having a pump inlet port (116) in fluid communication with an inlet passageway (24) and a pump outlet port (118) in fluid communication with an outlet passageway (26), wherein a first check valve (28) is positioned in the inlet passageway (24), wherein the valve body (102) further comprises a second check valve positioned in the outlet passageway (26), wherein the inlet and outlet passageway (24, 26) are in fluid communication with a main pressure chamber passageway (176), wherein the valve body (102) further comprises a relief valve (300) positioned in the control chamber, the relief valve (300) having an inlet end in fluid communication with the main pressure chamber passageway (176) and an outlet end in fluid communication with the atmosphere, and wherein the main pressure chamber passageway (176) is in fluid communication with the pump outlet passageway (174) and the inlet of the tire valve stem (80), and
wherein the pump inlet chamber has a third check valve (50) positioned between the pump inlet port (116) and the main pressure chamber (150), and/or wherein the pump outlet chamber has a fourth check valve (52) positioned between the pump outlet port (118) and an inlet hole,
wherein the inlet passageway (24) and the outlet passage way (26) are oriented in a horizontal direction in the valve body (102), and
wherein the third check valve (50) and the fourth check valve (52) are positioned in vertical passageways (32, 34) in the valve body (102).

2. The control valve (100) of claim 1 wherein the pump inlet port (116) and pump outlet port (118) are connectable to the pump inlet (42) and pump outlet (40), respectively.

3. The control valve (100) of claim 1 or 2 wherein the valve body (102) is shaped like a cup and/or wherein a cap is received over a first end of the valve body (102).

4. The control valve (100) of at least one of the previous claims wherein the valve body (102) further comprises a cap having detents which latch with an outer rim of the valve body (102) forming a snap fit.

5. The control valve (100) of at least one of the previous claims wherein the main pressure chamber (150) is in fluid communication with a manual fill assembly disposed at an outer end of the valve body (102).

6. The control valve (100) of at least one of the previous claims having an internal passageway in fluid communication with the main pressure chamber (150), wherein the internal passageway is configured for mounting on the distal end of the tire valve stem (80).

7. An air maintenance tire assembly comprising:
a tire (10) having a tire cavity, the tire (10) having a valve stem (80) projecting outward from the tire cavity (28'), the valve stem (80) having an internal valve stem air passageway in communication with the tire cavity (28') operative to direct pressurized air from the valve stem air passageway into the cavity (28');
a pump tube having an inlet end and an outlet end and being configured for pumping pressurized air into the tire cavity (28'); and
the control valve (100) in accordance with one or more of the preceding claims.

8. The air maintenance tire assembly of claim 7 wherein the relief valve (300) is operable to vent pressurized air when an air pressure within the tire cavity (28') is at or above a predetermined optimal inflation level, and the relief valve (300) is operable to close when air pressure within the tire cavity (28') is below the predetermined optimal inflation level.

9. The air maintenance tire assembly of at least one of the claims 7 and 8 wherein the main pressure chamber (150) is in fluid communication with a manual fill assembly disposed at an outer end of the valve body (102).

## Patentansprüche

1. Steuerventil (100) zum Steuern des Drucks in einem Reifenhohlraum (28') eines Reifens (10) während eines Betriebs einer Pumpe (15), die einen Pumpeneinlass (42) und einen Pumpenauslass (40) aufweist, wobei der Reifen (10) einen Reifenhohlraum (28') und einen Ventilschaft (80) mit einem distalen Ende aufweist, wobei das Steuerventil (100) Folgendes umfasst:
einen Ventilkörper (102) mit einer Pumpeneinlassöffnung (116) in Fluidkommunikation mit einem Einlassdurchgang (24) und einer Pumpenauslassöffnung (118) in Fluidkommunikation mit einem Auslassdurchgang (26), wobei ein erstes Rückschlagventil (28) in dem Einlassdurchgang (24) angeordnet ist, wobei der Ventilkörper (102) ferner ein zweites Rückschlagventil umfasst, das in dem Auslassdurchgang (26) angeordnet ist, wobei der Einlass- und der Auslassdurchgang (24, 26) in Fluidkommunikation mit einem Hauptdruckkammerdurchgang (176) stehen, wobei der Ventilkörper (102) ferner ein Überdruckventil (300) umfasst, das in der Steuerkammer angeordnet ist, wobei das Überdruckventil (300) ein Einlassende in Fluidkommunikation mit dem Hauptdruckkammerdurchgang (176) und ein Auslassende in Fluidkommunikation mit der Atmosphäre aufweist, und wobei der Hauptdruckkammerdurchgang (176) in Fluidkommunikation mit dem Pumpenauslassdurchgang (174) und dem Einlass des Reifenventilschaftes (80) steht, und
wobei die Pumpeneinlasskammer ein drittes Rückschlagventil (50) aufweist, das zwischen der Pumpeneinlassöffnung (116) und der Hauptdruckkammer (150) angeordnet ist, und/oder wobei die Pumpenauslasskammer ein viertes Rückschlagventil (52) aufweist, das zwischen der Pumpenauslassöffnung (118) und einem Einlassloch angeordnet ist,
wobei der Einlassdurchgang (24) und der Auslassdurchgang (26) in einer horizontalen Richtung in dem Ventilkörper (102) ausgerichtet sind, und
wobei das dritte Rückschlagventil (50) und das vierte Rückschlagventil (52) in vertikalen Durchgängen (32, 34) in dem Ventilkörper (102) angeordnet sind.

2. Steuerventil (100) nach Anspruch 1, wobei die Pumpeneinlassöffnung (116) und die Pumpenauslassöffnung (118) mit dem Pumpeneinlass (42) beziehungsweise dem Pumpenauslass (40) verbindbar sind.

3. Steuerventil (100) nach Anspruch 1 oder 2, wobei der Ventilkörper (102) wie eine Schale geformt ist und/oder wobei ein Deckel über einem ersten Ende des Ventilkörpers (102) aufgenommen wird.

4. Steuerventil (100) nach wenigstens einem der vorhergehenden Ansprüche, wobei der Ventilkörper (102) ferner einen Deckel mit Sperrgliedern umfasst, die mit einem äußeren Rand des Ventilkörpers (102) einrasten, was einen Schnappverschluss ausbildet.

5. Steuerventil (100) nach wenigstens einem der vorhergehenden Ansprüche, wobei die Hauptdruckkammer (150) mit einer manuellen Einfüllanordnung, die an einem äußeren Ende des Ventilkörpers (102) eingerichtet ist, in Fluidkommunikation steht.

6. Steuerventil (100) nach wenigstens einem der vorhergehenden Ansprüche, das einen inneren Durchgang aufweist, der in Fluidkommunikation mit der Hauptdruckkammer (150) steht, wobei der innere Durchgang zum Anbringen an dem distalen Ende des Reifenventilschaftes (80) konfiguriert ist.

7. Luftwartungsreifenanordnung, Folgendes umfassend:
einen Reifen (10) mit einem Reifenhohlraum, wobei der Reifen (10) einen Ventilschaft (80) aufweist, der von dem Reifenhohlraum (28') nach außen vorsteht, wobei der Ventilschaft (80) einen inneren Ventilschaftluftdurchgang in Kommunikation mit dem Reifenhohlraum (28') aufweist, der betriebsbereit ist, um Druckluft aus dem Ventilschaftluftdurchgang in den Hohlraum (28') zu leiten;
ein Pumpenrohr, das ein Einlassende und ein Auslassende aufweist und zum Pumpen von Druckluft in den Reifenhohlraum (28') konfiguriert ist; und
das Steuerventil (100) nach wenigstens einem der vorhergehenden Ansprüche.

8. Luftwartungsreifenanordnung nach Anspruch 7, wobei das Überdruckventil (300) betriebsfähig ist, um Druckluft zu entlüften, wenn ein Luftdruck innerhalb des Reifenhohlraums (28') auf oder über einem vorgegebenen optimalen Füllstand ist, und das Überdruckventil (300) betriebsfähig ist, um zu schließen, wenn der Luftdruck innerhalb des Reifenhohlraums (28') unter dem vorgegebenen optimalen Füllstand ist.

9. Luftwartungsreifenanordnung nach wenigstens einem der Ansprüche 7 und 8, wobei die Hauptdruckkammer (150) mit einer manuellen Füllanordnung, die an einem äußeren Ende des Ventilkörpers (102) eingerichtet ist, in Fluidkommunikation steht.

## Revendications

1. Soupape de réglage (100) pour le réglage de la pression dans une cavité de bandage pneumatique (28') d'un bandage pneumatique (10) au cours de l'activation d'une pompe (15) possédant une entrée de pompe (42) et une sortie de pompe (40), le bandage pneumatique (10) possédant une cavité de bandage pneumatique (28') et une tige de soupape (80) possédant une extrémité distale, la soupape de réglage (100) comprenant :
un corps de soupape (102) possédant un orifice d'entrée de pompe (116), mis en communication par fluide avec un passage d'entrée (24) et un orifice de sortie de pompe (118), mis en communication par fluide avec un passage de sortie (26) ; dans laquelle un premier clapet de non-retour (28) est disposé dans le passage d'entrée (24) ; dans laquelle le corps de soupape (102) comprend en outre un deuxième clapet de non-retour disposé dans le passage de sortie (26) ; dans laquelle le passage d'entrée et le passage de sortie (24, 26) sont mis en communication par fluide avec un passage de chambre de pression principale (176) ; dans laquelle le corps de soupape (102) comprend en outre une soupape de détente (300) disposée dans la chambre de réglage, la soupape de détente (300) possédant une extrémité d'entrée mise en communication par fluide avec le passage de chambre de pression principale (176) et une extrémité de sortie mise en communication par fluide avec l'atmosphère ; et dans laquelle le passage de chambre de pression principale (176) est mise en communication par fluide avec le passage de sortie de pompe (174) et avec l'entrée de la tige de soupape de bandage pneumatique (80) ; et
dans laquelle la chambre d'entrée de pompe possède un troisième clapet de non-retour (50) disposé entre l'orifice d'entrée de pompe (116) et la chambre de pression principale (150) ; et/ou dans laquelle la chambre de sortie de pompe possède un quatrième clapet de non-retour (52) disposé entre l'orifice de sortie de pompe (118) et un trou d'entrée ;
dans laquelle le passage d'entrée (24) et le passage de sortie (26) sont orientés dans une direction horizontale dans le corps de soupape (102) ; et
dans laquelle le troisième clapet de non-retour (50) et le quatrième clapet de non-retour (52) sont disposés dans des passages verticaux (32, 34) dans le corps de soupape (102).

2. Soupape de réglage (100) selon la revendication 1, dans laquelle l'orifice d'entrée de pompe (116) et l'orifice de sortie de pompe (118) peuvent être reliés à l'entrée de pompe (42) et à la sortie de pompe (40), respectivement.

3. Soupape de réglage (100) selon la revendication 1 ou 2, dans laquelle le corps de soupape (102) possède une configuration en forme de coupelle et/ou dans laquelle un capuchon vient se placer par-dessus une première extrémité du corps de soupape (102).

4. Soupape de réglage (100) selon au moins une des revendications précédentes, dans laquelle le corps de soupape (102) comprend en outre un capuchon qui possède des crans d'arrêt qui procurent un verrouillage avec un rebord externe du corps de soupape (102) en formant un emboîtement par pression.

5. Soupape de réglage (100) selon au moins une des revendications précédentes, dans laquelle la chambre de pression principale (150) est mise en communication par fluide avec un assemblage de remplissage manuel disposé à une extrémité externe du corps de soupape (102).

6. Soupape de réglage (100) selon au moins une des revendications précédentes, possédant un passage interne mis en communication par fluide avec la chambre de pression principale (150) ; dans laquelle le passage interne est configuré pour son montage sur l'extrémité distale de la tige de soupape de bandage pneumatique (80).

7. Assemblage de maintien de la pression du bandage pneumatique, comprenant :
un bandage pneumatique (10) possédant une cavité de bandage pneumatique, le bandage pneumatique (10) possédant une tige de soupape (80) faisant saillie à l'extérieur de la cavité de bandage pneumatique (28'), la tige de soupape (80) possédant un passage interne pour l'air dans la tige de soupape, mis en communication avec la cavité de bandage pneumatique (28'), qui peut être mis à contribution pour diriger de l'air mis sous pression à partir du passage pour l'air dans la tige de soupape jusque dans la cavité (28') ;
un tube de pompe qui possède une extrémité d'entrée et une extrémité de sortie et qui est configuré pour pomper de l'air mis sous pression jusque dans la cavité de bandage pneumatique (28') ; et
la soupape de réglage (100) selon une ou plusieurs des revendications précédentes.

8. Assemblage de maintien de la pression du bandage pneumatique selon la revendication 7, dans lequel la soupape de détente (300) peut être actionnée pour l'évacuation de l'air mis sous pression lorsqu'une pression de l'air régnant dans la cavité de bandage pneumatique (28') se situe à un niveau de gonflage optimal prédéterminé ou à un niveau supérieur à ce dernier, et la soupape de détente (300) peut être actionnée pour se fermer lorsque la pression de l'air régnant dans la cavité de bandage pneumatique (28') est inférieure au niveau de gonflage optimal prédéterminé.

9. Assemblage de maintien de la pression du bandage pneumatique selon au moins une des revendications 7 et 8, dans lequel la chambre de pression principale (150) est mise en communication par fluide avec un assemblage de remplissage manuel qui est disposé à une extrémité externe du corps de soupape (102).
